# EUROPEAN PATENT SPECIFICATION

(11) **EP 3 966 025 B1**
(45) Date of publication and mention of the grant of the patent: **13.12.2023**
(21) Application number: 20723077.2
(22) Date of filing: 28.04.2020
(51) Int. Cl.: G01F 23/292, B30B 11/08, B30B 15/30

(54) **ROTARY PRESS FOR COMPRESSING A PRESSING FOOD MATERIAL**
ROTATIONSPRESSE ZUM KOMPRIMIEREN EINES PRESSENDEN LEBENSMITTELMATERIALS
PRESSE ROTATIVE POUR COMPRESSER UN MATÉRIAU ALIMENTAIRE

(30) Priority: 10.05.2019 EP 19173727
(43) Date of publication of application: 16.03.2022
(73) Proprietor: Société des Produits Nestlé S.A., 1800 Vevey (CH)
(72) Inventor: LEAL, Roberto, 78224 SINGEN (DE); KEHLENBECK, Volker, 78351 Bodman-Ludwigshafen (DE); GRÜTER, Silvio, 8240 Thayngen (CH)
(74) Representative: Dinger, Hansjörg
(86) International application number: PCT/EP2020/061770
(87) International publication number: WO 2020/229165

(56) References cited:
- EP-A1- 0 952 432
- EP-A1- 3 238 930
- DE-A1-102017 207 162
- JP-A- H1 099 998
- JP-A- 2017 030 001
- JP-U- S63 106 599
- US-A1- 2016 243 781
- US-A1- 2018 162 023

## Description

The present invention relates to a rotary press for compressing a pressing food material, like food powder, into food tablets (e.g. bouillon tablets or bouillon cubes) as well as a method for pressing a food tablet, like a bouillon tablet or bouillon cube, by compression of a pressing food material, like a food powder with a rotary press.

Rotary presses are commonly known in the prior art. These presses usually comprise a conveyer for supplying a pressing (e.g. powdery) material to a feeding pipe of the press. The feeding pipe is usually arranged or oriented vertically for gravity feeding of the pressing material into a press section of the rotary press. Usually, the rotary presses are fed on a discontinuous basis. Upon a press process, a defined amount of pressing material for a tablet to be pressed is fed from the feeding pipe into the press system having die cavities for receiving an amount of pressing material to be compressed to a tablet. The fill level within the feeding pipe is usually kept within a given but quite large range. For instance, a single sensor measures, at a defined level of the feeding pipe, whether or not pressing material is present at this position of the feeding pipe. When the sensor is uncovered, a low level of pressing material inside the feeding pipe is detected. After a certain time of delay upon the low level detection but during continuation of the pressing process, a motor that drives the conveyer for feeding the pressing material into the feeding pipe is started to run at a fixed speed thus filling up the feeding pipe. When the sensor is then covered due to this filling-up, said motor continues running for a certain time of delay until it stops while the pressing process continues. This results in the fill level of pressing material within the feeding pipe varying within the mentioned range. It has been found that the above described known discontinuous feeding of the feeding pipe results in a weight variation of 0.15 g for a tablet having an average weight of 10 g. To avoid the fill level exceeding the sensor level or staying below the same for too long and thus avoiding the feeding pipe to drain or overflow, it is known to adjust the speed of the press system if a change of the fill level has not been detected for a defined time period. It has been found that the adjustment of the speed of the press system results in different hardness of the pressed tablet or cube. A habit of users of bouillon tablets is the crumbling of the tablet or cube into the dish during preparation process either to ensure good distribution and/or to accelerate its dissolution time in the cooking water. A minimum hardness is desired to allow a secure wrapping of the produced tablet. A defined maximum hardness ensures that a user can break the tablet with the fingers without the use of additional tools or appliances.

DE 10 2017 207162 A1 discloses a rotary press according to the preamble of claim 1. EP 0 952 432 A1 describes a method and device for detecting the amount of material stored in a plastic container, wherein the container's side walls are equipped with infrared light sources and light detectors.

It is thus an object of the present invention to provide a rotary press for compressing a pressing food material into a food tablet as well as a method for pressing a food tablet which allow for a more accurate or consistent production of food tablets with respect to average weight and preferably with respect to further characteristics of the pressed food material or food tablet.

The object is to be accomplished by means of the independent claims. The dependent claims advantageously study further the central idea of the present invention.

According to a first aspect of the present invention, there is provided a rotary press for compressing a pressing food material, like food powder, into food tablets according to claim 1.

According to the present invention, the generic term "tablet" covers any kind of pressing material being compressed or compacted from a powder or granule (mixture) into a solid dose. "Solid" means that it maintains its shape after the compression step; eventually supported by binders or other added agents. Tablets can have a cubic or disk or any other desired shape. A cubic tablet is herein also referred to as a "cube", e.g. a food cube or a bouillon cube, thus being a specific form of a (food) tablet.

According to the present invention, the term "food" or "food material" covers any edible or comestible substance/material. Further, the term "pressing food material" covers any kind of such "food material" provided in a compressible form able to be compressed into a tablet, e.g. a food powder or food granulate (mixture).

The rotary press comprises a feeding system. The feeding system comprises a feeder for continuously supplying the pressing food material and a feeding pipe for providing the pressing food material received from the feeder.

According to the present invention, the term "continuously supplying" means a continuous feeding or supply - here of pressing food material - irrespective of possible feeding or supply speed variations. The feeding pipe may be - as usual in the given technical field - of a gravity-fed type, i.e. allows for a gravity-fed supply of pressing food material by being substantially vertically arranged/oriented.

The rotary press further comprises a press system. The press system comprises a rotary die plate being drivable about a rotational axis. The die plate comprises a plurality of die cavities for successively receiving an amount of pressing food material provided by the feeding pipe and to produce food tablets inside the die cavities by means of punches upon a rotational movement of the die cavities of the rotary die plate with respect to the feeding system.

According to the present invention, the "press system" can, for instance, be a double punch system or a single punch system. The double punch system usually comprises two punches per die cavity, i.e. a lower and an upper punch provided at opposite sides of the die plate, which are relatively moveable to each other in a direction along the through-hole forming the die cavity for compressing the pressing material when being moved towards each other. The single punch system comprises one punch per die cavity, e.g. a lower punch, which is moveably provided relative to a static counter pressure plate. The counter pressure plate is preferably positioned opposite an opening of the die cavity via which opening the punch enters the die cavity for compressing the pressing material countered by the counter pressure plate. In principle, also other kinds of presses having a continuous tablet production are covered by the present invention.

The rotary press further comprises an analog sensor for detecting the fill level of the pressing food material in the feeding pipe.

The rotary press further comprises a control unit configured to (continuously) control a feeding speed of the feeder (e.g. via speed control of a feeder motor) for continuously supplying the pressing food material based on the detected fill level to keep the fill level at a defined fill level set point.

According to the present invention, "keep the fill level" is a set target to be aimed at most accurately and preferably means that the fill level is intended to be kept as good and exactly as possible at the desired or defined fill level set point while a (slight) deviation may occur, e.g., due to abnormal conditions of the rotary press itself (e.g. clogging, density variation), running conditions of the press system (e.g. successive filling/feeding of die cavities; which upon a fast running of the press system, e.g. at maximum speed, might be considered as an (approximately) continuous process), the pressing food material (e.g. agglomeration), the environment (e.g. temperature, humidity), and the like.

First of all, the rotary press according to the present invention allows for a continuous supply of pressing food material into the feeding pipe which in turn allows for a much more accurate and controllable fill level. Furthermore, the feeding speed of the feeder is (continuously) controlled to allow for a continuous supply of the pressing food material upon feedback from the analog sensor, i.e. based on the detected fill level such that the fill level is best kept at the defined fill level set point. Contrary to the prior art which purposely allows the fill level to vary along a large range about the sensor detection level, the present invention is focused to keep the fill level in fact at a defined fill level set point; meaning maintaining the set target, as mentioned; i.e. most accurately at or slightly about the fill level set point (e.g. between 5 and 40mm or even less about the fill level set point intended to be kept constant, preferably between 5 and 20mm, preferably between 5 and 10mm) to thus avoid unfavorable variation in the overall fill level.

It has been found that the fill level of the pressing food material within the feeding pipe has a huge impact on the final product, i.e. the food tablet, to be pressed. This comes about since a significant fill level may result in the pressing food material within the feeding pipe to be more compressed due to the feeding pipe providing the material by gravity feeding, like a too low fill level results in the pressing food material not be compacted sufficiently - e.g. having a too low density - which in turn results in a significant variation of the pressing food material fed to the press system and thus results in a significant variety of food tablet characteristics, like weight and hardness, of the food tablets being pressed. By most accurately keeping constant the fill level at a defined fill level set point, such a variation can be minimized. This is particularly achieved by the use of an analog sensor. As the analog sensor is outputting a continuous signal, e.g. from 0% to 100%, there is only one single sensor - namely the analog sensor - needed which can detect the fill level of the pressing food material in the feeding pipe as a value (e.g. 50% or 25%) and then the control unit can control the feeding speed of the feeder to keep the fill level set point. Moreover, it may also be possible to easily set the fill level set point at any desired (detection) level of the analog sensor within its detection range, as will be described in more detail herein below.

Moreover, unlike commonly known pressing processes in which the press speed is controlled to allow variation or adjustment in the feeding pipe fill level, the present invention aims at controlling the feeding speed of the feeder to be controlled by the control unit to keep the fill level at the defined fill level set point. Hence, the goal of keeping the fill level (as constant as possible) at the defined fill level set point is realized by means not directly related to the pressing process (like the press speed). This may allow any press system related parameters (like press speed) be controlled (e.g. adjusted) independently from the feeding system, so that the press system, which receives the pressing food material from the feeding system in a most accurate manner, can, for instance, be run at a constant speed, e.g. at full speed or any other desired speed.

It has been found that the present invention allows for production of food tablets having a minimized weight variation, e.g. a maximum weight variation of 0.05 g per 10 g food tablet, which means a reduction of the variation in weight compared to conventional press systems of about 66% (0.05 g vs. 0.15 g). This also results in less variation in raw pressing food material which in turn results in an increased economic efficiency.

As already indicated herein above, the control unit (or another control unit) could be further configured to control the feeding speed independent from a speed of the press system. This means that the speed of the press system can be set at any desired speed to allow for a desired press result of the tablets, while the feeding speed, irrespective of a press speed and press speed control, is only controlled based on - i.e. only dependent on - the actual fill level detection to keep the fill level at a defined fill level set point. Hence, even though the actual fill level might also be dependent on the press speed, the control of the feeding speed is only dependent on the detected fill level thus also taking into consideration any other factors which may influence the actual fill level, like temperature, humidity, clogging, pressing material, etc. As already mentioned, as the speed of the press system on the one hand and the feeding speed of the feeder on the other hand are independently controllable, the required pressing food material can be provided by the feeding system in a most accurate manner, while the press system can be controlled to obtain desired food tablet characteristics or just to let the press system run at maximum or any other desired speed. The accurate provision of pressing food material thus allows for a desired/maximum output while minimizing the weight variation. A limited variation in weight of the pressing food material also has an influence on other characteristics of the food tablet, like the average hardness and the average amount of raw pressing food material used. It has also been found that a variation in press speed, like applied in the prior art to control the fill level, results in a variation of the hardness of the food tablets which may result in the food tablet not be usable for the intended purpose (e.g. bouillon cube) or more unplanned stoppages of the whole process including also wrapping of the food tablet (e.g. food cube). As the press system characteristics might be controlled (e.g. adjusted) independently from the feeding speed and thus the fill level, adverse influences resulting from a variation of these press system characteristics can be avoided. For instance, in case the composition of the Swiss Maggi bouillon is pressed with a speed of 632 tablets/min the average hardness of these tablets is 163N, and with a reduced pressing speed of 500 tablets/min the average hardness of these tablets is 276N.

The rotary press may further comprise a press control unit, which is configured to control the speed of the press system independent from the feeding speed and the detected fill level. This allows for a maximum optimization of the fill level control on the one hand and the press production control on the other hand thus resulting in food tablets having a minimized weight variation and a minimized variation in other food tablet characteristics, like hardness. The (feeding speed or feeder) control unit can comprise the press control unit. Alternatively, the press control unit and the (feeder) control unit can also be independently provided with respect to each other, wherein "independently" may simply relate to the control actions but may also relate to a physically independent layout.

The control unit can be further configured, irrespective of a speed of the press system, to keep constant the feeding speed preferably at a defined set point speed, if (or once, or when) the analog sensor detects the fill level to correspond to the fill level set point. This should allow to keep the fill level at a defined fill level set point in an easy and efficient way; this preferably based on a defined set point speed which may allow for a most energy-saving operation. As this is carried out irrespective of a speed of the press system, again the feeding and pressing can be controlled individually and thus allow for a most accurate production of pressed food tablets with a minimum in variation of weight and preferably further food tablet characteristics.

The control unit can be further configured, irrespective of a speed of the press system, to increase the feeding speed preferably to a (defined and/or variable, e.g. dependent on the detected fill level) first speed, if the analog sensor detects the fill level to be below the fill level set point, and to decrease the feeding speed preferably to a (defined and/or variable, e.g. dependent on the detected fill level) second speed, if the analog sensor detects the fill level to be above the fill level set point. This should allow a most accurate control of the fill level to be best kept constant at the defined fill level set point due to a quick reaction of the control unit upon potential variation in the fill level to control the feeding speed in a most accurate manner and preferably based on defined first and second speeds thus also resulting in a most efficient control of the whole pressing process.

The analog sensor may have a continuous fill level detection range preferably between a defined upper fill level limit being above the fill level set point and a defined lower fill level limit being below the fill level set point. Due to particular circumstances, it might also be required and possible that the fill level set point be set at the same detection level as one of the upper or lower fill level limit. The use of an analog sensor allows for a continuous fill level detection over the whole detection range and thus for an accurate and preferably stepless feeding speed control for the feeder. Dependent on the type of analog sensor, e.g. dependent on its resolution, the better the sensor detection characteristics are, the better and smoother can be done the feeding speed control thus making the whole control process even more accurate and smoother. The use of one single analog sensor results in an easy and economic layout of the sensor arrangement, while accuracy in measuring the fill level can be easily adjusted either by the type of analog sensor used and/or by the control parameters set. The given detection range or any defined/set detection range (e.g. set by the control unit) within the overall detection range may further provide security measures to avoid the fill level exceeding or dropping below predefined (abnormal) fill levels resulting, for instance, in pressed food tablets deviation from a required average characteristic like weight and hardness. The control unit thus may further be configured to detect an abnormal condition, if the upper fill level limit (or another defined/set upper fill level limit) is exceeded (e.g. as such or for a predetermined time) and/or the lower fill level limit (or another defined/set lower fill level limit) is undercut (e.g. as such or for predetermined time). As a result of this abnormal condition detection, the rotary press may, for instance, output a corresponding signal and/or be stopped.

As already mentioned, the control unit may preferably be configured to define or set any desired fill level limits within the given detection range of the analog sensor. For instance, the control unit may set intermediate fill level limits being between the fill level set point and the upper and/or lower fill level limit. This should allow for a more accurate control of the fill level. For instance, reaching the respective intermediate fill level limits detected by the analog sensor may result in an intermediate feeding speed of the feeder be set, which intermediate feeding speed can preferably be between the constant feeding speed (e.g. the defined set point speed) and the respective feeding speed when the analog sensor detects an upper or lower fill level limit of the feeding pipe; with the aim to bring the fill level back to the defined fill level set point. Hence, the first speed and/or second speed might be variable dependent on the fill level being measured by the analog sensor at the respective fill level limits. As the analog sensor usually has a continuous detection range, there can be a number of intermediate fill level limits be set and preferably evenly distributed between the fill level set point and the upper and/or lower fill level limit. Every intermediate fill level limit can have a dedicated intermediate feeding speed assigned thereto which results in the intermediate speed being variable and which allows for a high accuracy of the feeding speed control. The distance between these set intermediate fill level limits can, for instance, be infinitesimal thus resulting in a highly accurate continuous speed control.

The control unit can be further configured, irrespective of a speed of the press system, to increase the feeding speed, preferably to a (defined and/or variable, e.g. dependent on the detected fill level) third speed higher than the first speed, if the analog sensor detects the fill level to decrease, preferably to drop or be below the lower fill level limit, and to decrease the feeding speed preferably to a (defined and/or variable, e.g. dependent on the detected fill level) fourth speed lower than the second speed, if the analog sensor detects the fill level to increase, preferably to exceed or be above the upper fill level limit. This should allow the press system to quickly react in case of detecting an "abnormal condition" to bring back the rotary press quickly into a normal condition, i.e. the fill level back to the defined fill level set point if not able to be kept by the given conditions. Of course, if these measures may not result in the fill level getting back to the fill level set point - e.g. within a predetermined time - an "abnormal procedure" may be performed which could be output of a corresponding signal and/or the rotary press be stopped.

The detection range preferably extends over a detection length extending between the feeder and the press system (i.e. usually in or along a vertical direction/extension) of between 20mm and 100mm, preferably between 25mm and 40mm, more preferred of about 35mm. The invention, however, is not limited to a particular length of the fill level detection range but this depends on the given circumstances of the required fill level, the length of the feeding pipe as well as the dimension of the feeding pipe and the whole system, and the overall rotary press characteristics like pressing speed and used pressing food material and the like.

The analog sensor can, if needed, be combined with other sensors, like further analog sensors or even other type of sensors, like digital sensors. These sensors are preferably positioned adjacent to each other preferably along a feeding direction extending between the feeder and the press system. The plurality of sensors can be distanced from each other along said feeding direction within a range of between 10mm and 40mm, preferably 15mm and 30mm, more preferred by about 18mm. In fact, the invention is not limited to a particular distance between the sensors or - if digital sensors are additionally used - discrete sensing levels but the distance can be set as required dependent on the given circumstances of the rotary press. Of course, the distance is limited by the overall length of the feeding pipe.

The analog sensor and, if present, also further sensors can be (jointly) provided on or attached to a (common) support. This allows for an easy handling and accurate mounting of the sensor(s).

The analog sensor can be configured such that the fill level set point can be moved relative to the feeding pipe to increase or decrease the fill level set point. Said movement can be provided by the analog sensor, e.g. directly or, if present, via the support, be movable relative to the feeding pipe, i.e. preferably along a vertical direction. The control unit can also be configured to change a (detection) level of the analog sensor for the fill level set point preferably within or with respect to the detection range of the analog sensor. In other words, the fill level set point can be set by the control unit at any desired level within - i.e. along - the detection range. For instance, the mentioned value representing the fill level set point can, for instance, be changed and, e.g., offset from 25% to 50%, to thus set a new fill level set point at another level of the feeding pipe. The other fill level limits around the detection level of the fill level set point can then obviously be defined or (re-)set at corresponding detection levels, if needed. The change of (the detection level(s)) of the fill level set point and eventually the other fill level limits can allow the analog sensor to be adapted dependent on the given needs for obtaining defined pressed food tablets. Change of the detection level of the fill level set point and correspondingly the other fill level limits, if needed, can allow for an easy adaptation of the fill level set point simply based on the control settings. On the other hand, a physical movement of the analog sensor allows for an adjustment of the fill level set point even beyond the actual detection range as the analog sensor can preferably be positioned at any desired level along the feeding length. If more than one sensor is present, every sensor can be physically movable independently from the other sensors, which would even more increase adjustability of the detection range.

The feeding pipe may have a feeding length extending (preferably in a vertical direction) between the feeder and the press system of between 50mm and 4000mm, preferably between 100mm and 2000mm, preferably between 200mm and 1500mm, more preferred between 500mm and 1000mm, and most preferred of about 700mm. Of course, the present invention is not limited to a particular feeding length, which, however, preferably depends on the given requirements for the pressing process.

The die cavities are arranged and preferably evenly distributed about the rotational axis, preferably on the same radius. This allows for a most accurate and fast pressing process. The die cavities may have a polygonal cross-section when seen in a pressing direction of the punches, e.g. rectangular or square, for pressing a cube-shaped food tablet like a bouillon cube. Of course, the die cavities may also have another cross-section, like circular or oval.

The feeding system preferably comprises a hopper for tipping of pressing food material to the feeder. Moreover, the feeding system may further comprise a sieve, preferably being provided between the feeder and the feeding pipe to sieve the supplied pressing food material. The sieve can be provided in moveable (e.g. rotatable) or fixed manner. The sieve is preferably detachably provided. The feeding system may further comprise a press feeder for distributing the pressing food material provided by the feeding pipe to the die cavities. The press feeder can be a feeding shoe preferably having at least one or more feeding propeller(s) for distributing the pressing food material provided by the feeding pipe to the die cavities. The press feeder can be provided between the feeding pipe (e.g. preferably a (bottom) outlet of the feeding pipe) and the die cavities of the rotary die plate to allow for defined feeding of the die cavities passing the feeding pipe upon the rotational movement of the die cavities of the rotary die plate with respect to the feeding system. The feeder may comprise a screw feeder or a vibration feeder or a screen conveyor or any other kind of (material) feeder/conveyor. Moreover, a motor, like an electric motor, can be provided to run the feeder at a defined feeding speed preferably controlled by the control unit. The motor can run at desired speeds and/or in a start/stop mode; preferably by a frequency drive.

The press system can further comprise a pressing station for applying a pressing force onto the punches; i.e. on both opposite (groups of) punches in a double punch system or on the single (group of) punches in a single punch system. Moreover, the press system can further comprise a tablet discharge station for discharging the compressed food tablet, preferably in the form of a bouillon cube, e.g. by means of an ejector unit.

According to a second aspect of the present invention, there is provided a method for pressing a food tablet, like a bouillon cube, by compression of pressing food material, like a food powder, with a rotary press according to claim 12, the method comprising the steps of:
a) continuously supplying the pressing food material by a feeder to a feeding pipe of a feeding system of the rotary press, wherein a fill level of the pressing food material in the feeding pipe is detected by an analog sensor,
b) successively receiving an amount of pressing food material provided by the feeding pipe in a plurality of die cavities of a rotary die plate of a press system upon a rotational movement of the rotary die plate being drivable about a rotational axis with respect to the feeding system, and
c) producing food tablets inside the die cavities by means of punches upon the rotational movement of the rotary die plate,
wherein, upon continuous supply of the pressing food material to the feeding pipe, a feeding speed of the feeder is controlled based on the detected fill level to keep the fill level at a defined fill level set point;
characterized in that the analog sensor is a LED infrared sensors, and wherein the analog sensor consist of one transmitter and one receiver, being provided on opposite sides of the feeding pipe at the same level.

The method according to the present invention allows for obtaining the advantages as already defined herein above for the rotary press and thus allows for a most accurate and resource-conserving and economically efficient method; i.e. performance of the pressing process.

The method may further comprise the step of keeping constant the feeding speed preferably at a defined set point speed, irrespective of a speed of the press system, if (or once, or when) the analog sensor detects the fill level to correspond to the fill level set point. Moreover, the method may further comprise the steps of increasing the feeding speed preferably to a (defined and/or variable, e.g. dependent on the detected fill level) first speed, irrespective of a speed of the press system, if the analog sensor detects the fill level to be below the fill level set point, and decreasing the feeding speed preferably to a (defined and/or variable, e.g. dependent on the detected fill level) second speed, irrespective of a speed of the press system, if the analog sensor detects the fill level to be above the fill level set point.

The analog sensor preferably has a continuous fill level detection range between a defined upper fill level limit being above the fill level set point and a defined lower fill level limit being below the fill level set point. Based on this, the method may further comprise the steps of increasing the feeding speed preferably to a (defined and/or variable, e.g. dependent on the detected fill level) third speed higher than the first speed, irrespective of a speed of the press system, if the analog sensor detects the fill level to decrease (e.g. third speed being variable and dependent on the detected fill level), preferably to drop or be below the lower fill level limit, and decreasing the feeding speed preferably to a (defined and/or variable, e.g. dependent on the detected fill level) fourth speed lower than the second speed, irrespective of a speed of the press system, if the analog sensor detects the fill level to increase (e.g. fourth speed being variable and dependent on the detected fill level), preferably to exceed or be above the upper fill level limit.

Further features, advantages and objects of the present invention would come apparent for the skilled person when reading the following detailed description of an embodiment of the present invention, when taking in conjunction with the Figure of the enclosed drawing.

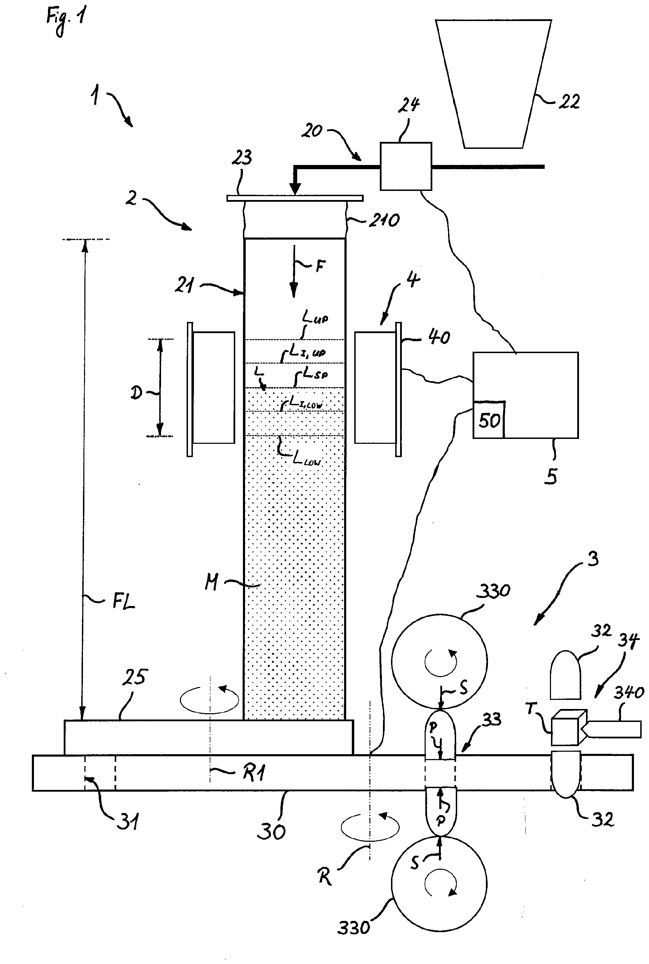

The only Figure 1 shows a simplified schematic view of a rotary press 1 for compressing a pressing food material M, like food powder, into food tablets T according to the present invention.

The rotary press 1 comprises a feeding system 2 for feeding the pressing food material M to a press system 3 of the rotary press 1 described in more detail herein below. The feeding system 2 comprises a feeder 20 for continuously supplying the pressing food material M. The feeding system 2 further comprises a feeding pipe 21 for providing the pressing food material M received from the feeder 20. The feeding pipe 21 may be of the gravity-fed supply type and thus extends substantially vertically or is substantially vertically arranged/oriented. The feeding pipe 21 may have a feeding length FL extending between the feeder 20 and the press system 3 of between 50mm and 4000mm, preferably between 100mm and 2000mm, preferably between 200mm and 1500mm, more preferred between 500mm and 1000mm, and most preferred of about 700mm. The feeding pipe 21, like all other elements of the rotary press, can be made of a food grade material, for instance a food grade plastic (e.g. polyvinylidene fluoride (PVDF)). The feeding pipe 21 vibrates or agitates. This ensures that no pressing food material M sticks to the wall.

The feeding system 2 can further comprise a hopper 22 for tipping of pressing food material M to the feeder 20. Moreover, a sieve 23, like a rotary sieve or a fixed sieve, can preferably be provided between the feeder 20 and the feeding pipe 21 to sieve the supplied pressing food material M. This sieve 23 or additional sieves can also be provided at any other desired location within the feeding passage of the pressing food material M. The feeding pipe 21 can be a rigid or flexible pipe, tube or hose or the like. The feeding pipe 21 may comprise a flexible connection section 210 to connect the feeding pipe 21 to the feeder 20 or sieve 23.

The feeder 20 may comprise a screw feeder or a vibration feeder or any other kind of feeder or conveyor. Moreover, the feeder 20 may comprise a motor 24, like an electric motor, to run the feeder 20 at a defined feeding speed which is preferably controlled by a control unit 5 of the rotary press 1, which is described in more detail herein below.

The rotary press 1 further comprises a press system 3. The press system 3 comprises a rotary die plate 30 being drivable about a rotational axis R. The die plate 30 comprises a plurality of die cavities 31 (i.e. volumetric filling dies or dices; in Fig. 1, there are schematically shown only three die cavities 31 for clarity reasons) for successively receiving an amount of pressing food material M provided by the feeding pipe 21 and to produce food tablets T inside the die cavities 31 by means of punches 32 upon a rotational movement of the die cavities 31 of the rotary die plate 30 about the rotational axis R and with respect to the feeding system 2. In Fig. 1, only two pairs of punches 32 are shown for clarity reasons, while usually every die cavity 31 is provided with a pair of punches 32 which are usually guided within a guide groove extending about the rotational axis R, respectively, to move the punches towards and away from the die cavity 31 or with respect to each other. Fig. 1 shows a double punch system while the application is not limited to such press systems 3. For instance, the press system 3 can also be a single punch system having only one punch per die cavity. The group of single punches is then provided on one side of the die plate. The side of the through-hole forming the die cavity being opposite the single punch is closed by a static counter pressure plate (e.g. a closed bottom of the die cavity) to counter the pressing force of the single punch when the single punch is moved into/inside the die cavity and towards the counter pressure plate for compressing the pressing material.

There may further be provided a press feeder (or material distributor) 25 for distributing the pressing food material M provided by the feeding pipe 21 to the die cavities 31. Therefore, the press feeder 25 may be a feeding shoe preferably having at least one feeding propeller (not shown but commonly known in the technical field of rotary presses) preferably being rotatable about a rotational axis R1 for distributing the pressing food material M provided by the feeding pipe 21 to the die cavities 31. The press feeder 25 is preferably provided between the feeding pipe 21 (e.g. preferably a (bottom) outlet of the feeding pipe) and the die cavities 31 of the rotary die plate 30 to allow for defined feeding of the die cavities 31 passing the feeding pipe 21 upon the rotational movement of the die cavities 31 of the rotary die plate 30 about the rotational axis R and with respect to the feeding system 2.

The press system 3 can comprise a pressing station 33 for applying a pressing force S onto the punches 32. Therefore, there may be provided compression rolls 330 by means of which a dedicated pressing force S is applied onto the punches 32 to apply a corresponding pressing force on the pressing food material M to produce the food tablet T. Moreover, the press system 3 may further comprise a tablet discharge station 34 for discharging the compressed food tablet T, preferably in the form of a bouillon cube. Therefore, an ejector unit 340 may be provided to eject the produced food tablet T.

The die cavities 31 are preferably arranged and more preferred evenly distributed about the rotational axis R. In a preferred embodiment, the die cavities 31 have a polygonal cross-section when seen in a pressing direction P of the punches 32, e.g. rectangular or square, for pressing a cube-like food tablet T like a bouillon cube.

The rotary press 1 further comprises an analog sensor 4 for detecting the fill level L of the pressing food material M in the feeding pipe 21. The analog sensor 4 can be provided on or attached to a support 40, which is preferably moveable along the feeding pipe and/or detachably provided.

According to the invention, the analog sensor 4 is a LED infrared sensor, i.e. using an infrared LED array preferably able to measure through opaque materials (e.g. plastic); i.e. materials of which the feeding pipe 21 is preferably made. The analog sensor 4 consist of one transmitter and one receiver being provided on opposite sides of the feeding pipe 21 at the same level, as shown in Fig. 1, to perform a detection of pressing food material M inside the feeding pipe 21. The transmitter and receiver of the analog sensor 4 can be provided on or attached to the same support 40. The analog sensor can preferably be fed with 24V DC. The analog sensor output can thus be obtained in the format needed (e.g. from 0V to 10V, from 4mA to 20mA, or any other analog signal). Just as an example for such an analog sensor 4, it is referred to the specific model BOH AI-R165-011-01-S49F of Balluff. Of course, any other (type of) sensors preferably with the same functionality can be used.

The rotary press 1 further comprises a control unit 5 configured to control a feeding speed of the feeder 20 (e.g. the motor speed of the motor 24 mentioned herein above) for continuously supplying the press food material M based on the detected fill level L to keep the fill level L at a defined fill level set point L_{SP}. In a preferred embodiment, the control unit 5 can be configured to control the feeding speed independent from a speed of the press system 3. The control unit 5 can be programmable, e.g. with a specific algorithm, to allow for a defined control of the feeding speed.

The rotary press 1 can further comprise a press control unit 50 configured to control the speed of the press system 3 independent from the feeding speed and detected fill level L. The control unit 5 may comprise the press control unit 50 as schematically indicated in Fig. 1. However, the press control unit 50 can also be independently provided with respect to the control unit 5.

The control unit 5 can be configured, irrespective of a speed of the press system 3, to keep constant the feeding speed preferably at a defined set point speed, if (or once, or when) the analog sensor 4 detects the fill level L to correspond to the fill level set point L_{SP}.

The control unit 5 can be further configured, irrespective of a speed of the press system 3, to increase the feeding speed preferably to a defined and/or variable, e.g. dependent on the detected fill level) first speed, if the analog sensor 4 detects the fill level L to be below the fill level set point L_{SP}, and to decrease the feeding speed preferably to a defined and/or variable, e.g. dependent on the detected fill level) second speed, if the analog sensor 4 detects the fill level L to be above the fill level set point L_{SP}.

The analog sensor 4 can have a continuous fill level detection range D preferably between a defined upper fill level limit L_{UP} being above the fill level set point L_{SP} and a defined lower fill level limit L_{LOW} being below the fill level set point L_{SP}. Due to particular circumstances, it might also be required and possible that the fill level set point L_{SP} be set at the same detection level as one of the upper or lower fill level limit L_{UP}, L_{LOW}. The control unit 5 can preferably be configured to set intermediate fill level limits L_{I,UP}, L_{I,LOW} being between the fill level set point L_{SP} and the upper and/or lower fill level limit L_{UP}, L_{LOW}, to thus provide any desired threshold value levels which might be required for the control, e.g. the detection of the fill level L and preferably for keeping the fill level L at the fill level set point L_{SP}. For instance, reaching the respective intermediate fill level limits L_{I,UP}, L_{I,LOW} detected by the analog sensor 4 may result in an intermediate feeding speed of the feeder 20 be set, which intermediate feeding speed can preferably be between the constant feeding speed (e.g. the defined set point speed) and the respective feeding speed when the analog sensor 4 detects an upper or lower fill level limit L_{UP}, L_{LOW} within the feeding pipe 21. Hence, the first speed and/or second speed might be variable dependent on the fill level L being measured by the analog sensor 4 at the respective fill level limits or detection levels.

The control unit 5 can also be configured, irrespective of a speed of the press system 3, to increase the feeding speed, preferably to a defined and/or variable, e.g. dependent on the detected fill level) third speed higher than the first speed, if the analog sensor 4 detects the fill level L to decrease, preferably to drop or be below the lower fill level limit L_{LOW}, and to decrease the feeding speed, preferably to a defined and/or variable, e.g. dependent on the detected fill level) fourth speed lower than the second speed, if the analog sensor 4 detects the fill level L to increase, preferably to exceed or be above the upper fill level limit L_{UP}.

The fill level detection range D preferably extends over a detection length extending between the feeder 20 and the press system 3 of between 20mm and 100mm, preferably between 25mm and 40mm, and more preferred of a about 35mm. Due to the use of an analog sensor 4, the detection range is a "continuous detection range" as already described herein above.

In a preferred embodiment, the analog sensor 4 is configured such that the fill level set point L_{SP} can be moved relative to the feeding pipe 21 to increase or decrease the fill level set point L_{SP}. Such an adjustment or movement of the fill level set point L_{SP} can be achieved in different ways. For instance, said movement can be provided by the analog sensor 4, e.g. directly or via the support 40, be moveable relative to the feeding pipe 21; here in a vertical direction, i.e. along the feeding pipe 21 or its longitudinal extension or its feeding length FL or the feeding direction F. It is also possible that the control unit 5 is configured to change a (detection) level of the analog sensor 4 for the fill level set point L_{SP} preferably within or with respect to the detection range D of the analog sensor 4. In other words, the fill level set point L_{SP} can be set by the control units at any desired level within - i.e. along - the detection range D. The other fill level limits (e.g. upper fill level limit L_{UP}, lower fill level limit L_{LOW}, intermediate fill level limits L_{I,UP}, L_{I,LOW}) around the detection level of the fill level set point L_{SP} can then be defined or (re-)set at corresponding detection levels, if needed.

In the following, a method for pressing a food tablet T, like a bouillon cube, by compression of the pressing food material M, like a food powder, with a rotary press 1 (e.g. a rotary press 1 according to the present invention) is described in detail.

In a first step, the pressing food material M is continuously supplied by the feeder 20 to the feeding pipe 21 of the feeding system 2 of the rotary press 1. The fill level L of the pressing food material M in the feeding pipe 21 is detected by the analog sensor 4 during the continuous supply of the pressing food material M.

In a second step, an amount of pressing food material M provided by the feeding pipe 21 is successively received in the plurality of die cavities 31 of the rotary die plate 30 of the press system 3 upon a rotational movement of the rotary die plate 30 being drivable about the rotational axis R with respect to the feeding system 2.

In a third step, food tablets T are produced inside the die cavities 31 by means of punches 32 upon the rotational movement of the rotary die plate 30 about the rotational axis R, preferably in the pressing station 33. After being produced, the food tablets T can be ejected in a discharge station 34 preferably by means of an ejector unit 340 for ejecting the produced food tablets T.

Upon the continuous supply of the pressing food material M to the feeding pipe 21, a feeding speed of the feeder 20 is controlled based on the detected fill level L to keep the fill level L at a defined fill level set point L_{SP}.

The method may further comprise the step of keeping constant the feeding speed preferably at a defined set point speed, irrespective of a speed of the press system 3, if (or once, or when) the analog sensor 4 detects the fill level L to correspond to the fill level set point L_{SP}.

The method may further comprise the steps of increasing the feeding step preferably to a defined and/or variable, e.g. dependent on the detected fill level) first speed, irrespective of a speed of the press system 3, if the analog sensor 4 detects the fill level L to be below the fill level set point L_{SP}, and decreasing the feeding speed preferably to a defined and/or variable, e.g. dependent on the detected fill level) second speed, irrespective of a speed of the press system 3, if the analog sensor 4 detects the fill level L to be above the fill level set point L_{SP}.

The method may further comprise the steps of increasing the feeding speed, preferably to a defined and/or variable, e.g. dependent on the detected fill level) third speed higher than the first speed, irrespective of a speed of the press system 3, if the analog sensor 4 detects the fill level L to decrease, preferably to drop or be below the lower fill level limit L_{LOW}, and decreasing the feeding speed preferably to a defined and/or variable, e.g. dependent on the detected fill level) fourth speed lower than the second speed, irrespective of a speed of the press system 3, if the analog sensor 4 detects the fill level L to increase, preferably to exceed or be above the upper fill level limit L_{UP}.

The first to fourth speed can be variably set or controlled dependent on the detected fill level with respect to the defined fill level set point (e.g. based on the value of the distance between the detected fill level and the fill level set point) to thus allow for a highly accurate continuous speed control.

Different kind of sensors have been tested and the LED infrared analog sensors are most accurate to detect the fill level of the food material. Capacitive sensors are not as precise for food materials as LED infrared analog sensors. Within different food materials the dielectric constant is changing affecting how well the sensor is detecting the material. To get better measurements the sensors need to have a bigger size to send and receive a corresponding signal. These big capacitive sensors are technically more difficult to implement as LED infrared analogue sensors. The use of paddle sensors is as well not possible for this application due to the sticky food material. The food material sticks to the sensor giving a fake detection signal. Even a radar sensor was not precise since it was detecting the dust of the food material.

The following table shows the relative weight variation of a 10g food tablet.

| **Sensor type** | Weight variation of a 10g food tablet |
|---|---|
| No sensor | 0.15g |
| LED infrared analog sensor | 0.02g |
| Capacitive sensors | 0.12g |
| Paddle sensors | n.a. after longer time due to stickiness of food material at sensor |
| Radar sensor | 0.10g |

The present invention is not limited by the embodiment as described herein above, as long as being covered by the appended claims. All the features of the embodiment described herein above can be combined in any possible way and can be interchangeably provided as long as being covered by the scope of protection defined by the appended claims.

## Claims

1. Rotary press (1) for compressing a pressing food material (M), like food powder, into food tablets (T), comprising:
• a feeding system (2) comprising a feeder (20) for continuously supplying the pressing food material (M) and a feeding pipe (21) for providing the pressing food material (M) received from the feeder (20),
• a press system (3) comprising a rotary die plate (30) being drivable about a rotational axis (R) and comprising a plurality of die cavities (31) for successively receiving an amount of pressing food material (M) provided by the feeding pipe (21) and to produce food tablets (T) inside the die cavities (31) by means of punches (32) upon a rotational movement of the die cavities (31) of the rotary die plate (30) with respect to the feeding system (2),
• an analog sensor (4) for detecting a fill level (L) of the pressing food material (M) in the feeding pipe (21), and
• a control unit (5) configured to control a feeding speed of the feeder (20) for continuously supplying the pressing food material (M) based on the detected fill level (L) to keep the fill level (L) at a defined fill level set point (L_{SP});
**characterized in that** the analog sensor is a LED infrared sensor, and wherein the analog sensor (4) consist of one transmitter and one receiver, being provided on opposite sides of the feeding pipe (21) at the same level.

2. Rotary press (1) according to claim 1, wherein the control unit (5) is further configured to control the feeding speed independent from a speed of the press system (3).

3. Rotary press (1) according to any one of the preceding claims, further comprising a press control unit (50) configured to control the speed of the press system (3) independent from the feeding speed and the detected fill level (L), wherein the control unit (5) comprises the press control unit (50).

4. Rotary press (1) according to any one of the preceding claims, wherein the control unit (5) is configured, irrespective of a speed of the press system (3), to keep constant the feeding speed preferably at a defined set point speed, if the analog sensor (4) detects the fill level (L) to correspond to the fill level set point (L_{SP}).

5. Rotary press (1) according to any one of the preceding claims, wherein the control unit (5) is configured, irrespective of a speed of the press system (3), to increase the feeding speed preferably to a first speed, if the analog sensor (4) detects the fill level (L) to be below the fill level set point (L_{SP}), and to decrease the feeding speed preferably to a second speed, if the analog sensor (4) detects the fill level (L) to be above the fill level set point (L_{SP}).

6. Rotary press (1) according to any one of the preceding claims, wherein the analog sensor (4) has a continuous fill level detection range (D) between a defined upper fill level limit (L_{UP}) being above the fill level set point (L_{SP}) and a defined lower fill level limit (L_{LOW}) being below the fill level set point (L_{SP}), wherein the control unit is preferably configured to set intermediate fill level limits (L_{I,UP}, L_{I,LOW}) being between the fill level set point (L_{SP}) and the upper and/or lower fill level limit (L_{UP}, L_{LOW}), wherein the control unit (5) is configured, irrespective of a speed of the press system (3), to increase the feeding speed, preferably to a third speed higher than the first speed, if the analog sensor (4) detects the fill level (L) to decrease, preferably to drop or be below the lower fill level limit (L_{LOW}), and to decrease the feeding speed, preferably to a fourth speed lower than the second speed, if the analog sensor (4) detects the fill level (L) to increase, preferably to exceed or be above the upper fill level limit (L_{UP}).

7. Rotary press (1) according to claim 6, wherein the detection range (D) extends over a detection length extending between the feeder (20) and the press system (3) of between 20mm and 100mm, preferably between 25mm and 40mm, more preferred of about 35mm.

8. Rotary press (1) according to any one of the preceding claims, wherein the analog sensor (4) is configured such that the fill level set point (L_{SP}) can be moved relative to the feeding pipe (21) to increase or decrease the fill level set point (L_{SP}), wherein said movement is provided by the analog sensor (4) be moveable relative to the feeding pipe (21) and/or the control unit (5) being configured to change a detection level of the analog sensor for the fill level set point (L_{SP}) preferably within or with respect to the detection range (D) of the analog sensor (4).

9. Rotary press (1) according to any one of the preceding claims, wherein the feeding pipe (21) has a feeding length (FL) extending between the feeder (20) and the press system (3) of between 50mm and 4,000mm, preferably between 100mm and 2,000mm, preferably between 200mm and 1,500mm, more preferred between 500mm and 1,000mm, and most preferred of 700mm.

10. Rotary press (1) according to any one of the preceding claims, wherein the die cavities (31) are arranged and preferably evenly distributed about the rotational axis (R), and/or
wherein the die cavities (31) have a polygonal cross section when seen in a pressing direction (P) of the punches (32), e.g. rectangular or square, for pressing a bouillon cube.

11. Rotary press (1) according to any one of the preceding claims, wherein the feeding system (2) further comprises:
• a hopper (22) for tipping of pressing food material (M) to the feeder (20), and
• a sieve (23) being provided between the feeder (20) and the feeding pipe (21) to sieve the supplied pressing food material (M), the sieve (23) preferably being moveable or fixed, and
• a press feeder (25), like a feeding shoe preferably having a feeding propeller, for distributing the pressing food material (M) provided by the feeding pipe (21) to the die cavities (31), being provided between the feeding pipe (21) and the die cavities (31) of the rotary die plate (30) to allow for defined feeding of the die cavities (31) passing the feeding pipe (21) upon the rotational movement of the die cavities (31) of the rotary die plate (30) with respect to the feeding system (2), and
wherein the feeder (20) comprises a screw or vibration feeder, and/or an electric motor (24) to run the feeder (20) at a defined feeding speed controlled by the control unit (5), and
wherein the press system (3) further comprises:
• a pressing station (33) for applying a pressing force (S) onto the punches (32), and
• a tablet discharge unit (34) for discharging the compressed food tablet (T), preferably a bouillon cube or bouillon tablet.

12. Method for pressing a food tablet (T), like a bouillon cube, by compression of a pressing food material (M), like a food powder, with a rotary press (1), the method comprising the steps of:
a) continuously supplying the pressing food material (M) by a feeder (20) to a feeding pipe (21) of a feeding system (2) of the rotary press (1), wherein a fill level (L) of the pressing food material (M) in the feeding pipe (21) is detected by an analog sensor (4),
b) successively receiving an amount of pressing food material (M) provided by the feeding pipe (21) in a plurality of die cavities (31) of a rotary die plate (30) of a press system (3) upon a rotational movement of the rotary die plate (30) being drivable about a rotational axis (R) with respect to the feeding system (2), and
c) producing food tablets (T) inside the die cavities (31) by means of punches (32) upon the rotational movement of the rotary die plate (30),
wherein, upon continuous supply of the pressing food material (M) to the feeding pipe (21), a feeding speed of the feeder (20) is controlled based on the detected fill level (L) to keep the fill level (L) at a defined fill level set point (L_{SP});
**characterized in that**
the analog sensor is a LED infrared sensor, and wherein the analog sensor (4) consist of one transmitter and one receiver, being provided on opposite sides of the feeding pipe (21) at the same level.

13. Method according to claim 12, further comprising the step of:
keeping constant the feeding speed preferably at a defined set point speed,
irrespective of a speed of the press system (3), if the analog sensor (4) detects the fill level (L) to correspond to the fill level set point (L_{SP}).

14. Method according to claim 12 or 13, further comprising the steps of:
increasing the feeding speed preferably to a first speed, irrespective of a speed of the press system (3), if the analog sensor (4) detects the fill level (L) to be below the fill level set point (L_{SP}), and
decreasing the feeding speed preferably to a second speed, irrespective of a speed of the press system (3), if the analog sensor (4) detects the fill level (L) to be above the fill level set point (L_{SP}).

15. Method according to any one of claims 12 to 14, wherein the analog sensor (4) has a continuous fill level detection range (D) between a defined upper fill level limit (L_{UP}) being above the fill level set point (L_{SP}) and a defined lower fill level limit (L_{LOW}) being below the fill level set point (L_{SP}), the method further comprising the steps of:
increasing the feeding speed preferably to a third speed higher than the first speed, irrespective of a speed of the press system (3), if the analog sensor (4) detects the fill level (L) to decrease, preferably to drop or be below the lower fill level limit (L_{LOW}), and
decreasing the feeding speed preferably to a fourth speed lower than the second speed, irrespective of a speed of the press system (3), if the analog sensor (4) detects the fill level (L) to increase, preferably to exceed or be above the upper fill level limit (L_{UP}).

## Patentansprüche

1. Rotationspresse (1) zum Komprimieren eines Presslebensmittelmaterials (M), wie Lebensmittelpulver, in Lebensmitteltabletten (T), umfassend:
• ein Zuführsystem (2), umfassend einen Zuführer (20) zum kontinuierlichen Liefern des Presslebensmittelmaterials (M) und ein Zuführrohr (21) zum Bereitstellen des Presslebensmittelmaterials (M), das von dem Zuführer (20) aufgenommen wird,
• ein Presssystem (3), umfassend eine Rotationsmatrizenplatte (30), die um eine Rotationsachse (R) herum antreibbar ist und umfassend eine Vielzahl von Matrizenhohlräumen (31) zum sukzessiven Aufnehmen einer Menge von Presslebensmittelmaterial (M), das durch das Zuführrohr (21) bereitgestellt wird, und um Lebensmitteltabletten (T) innerhalb der Matrizenhohlräume (31) mittels Stempel (32) bei einer Rotationsbewegung der Matrizenhohlräume (31) der Rotationsmatrizenplatte (30) in Bezug auf das Zuführsystem (2) herzustellen,
• einen analogen Sensor (4) zum Erfassen eines Füllstands (L) des Presslebensmittelmaterials (M) in dem Zuführrohr (21) und
• eine Steuereinheit (5), die konfiguriert ist, um eine Zuführgeschwindigkeit des Zuführers (20) zum kontinuierlichen Liefern des Presslebensmittelmaterials (M) basierend auf dem erfassten Füllstand (L) zu steuern, um den Füllstand (L) bei einem definierten Füllstandssollwert (L_{SP}) zu halten;
**dadurch gekennzeichnet, dass**
der analoge Sensor ein LED-Infrarotsensor ist und wobei der analoge Sensor (4) aus einem Sender und einem Empfänger besteht, die auf gegenüberliegenden Seiten des Zuführrohrs (21) auf derselben Ebene bereitgestellt sind.

2. Rotationspresse (1) nach Anspruch 1, wobei die Steuereinheit (5) ferner konfiguriert ist, um die Zuführgeschwindigkeit ungeachtet einer Geschwindigkeit des Presssystems (3) zu steuern.

3. Rotationspresse (1) nach einem der vorstehenden Ansprüche, ferner umfassend eine Presssteuereinheit (50), die konfiguriert ist, um die Geschwindigkeit des Presssystems (3) ungeachtet der Zuführgeschwindigkeit und dem erfassten Füllstand (L) zu steuern, wobei die Steuereinheit (5) die Presssteuereinheit (50) umfasst.

4. Rotationspresse (1) nach einem der vorstehenden Ansprüche, wobei die Steuereinheit (5) unabhängig von einer Geschwindigkeit des Presssystems (3) konfiguriert ist, um die Zuführgeschwindigkeit vorzugsweise bei einer definierten Sollwertgeschwindigkeit konstant zu halten, falls der analoge Sensor (4) erfasst, dass der Füllstand (L) dem Füllstandssollwert (L_{SP}) entspricht.

5. Rotationspresse (1) nach einem der vorstehenden Ansprüche, wobei die Steuereinheit (5) unabhängig von einer Geschwindigkeit des Presssystems (3) konfiguriert ist, um die Zuführgeschwindigkeit vorzugsweise auf eine erste Geschwindigkeit zu erhöhen, falls der analoge Sensor (4) erfasst, dass der Füllstand (L) unter dem Füllstandssollwert (L_{SP}) liegt, und um die Zuführgeschwindigkeit vorzugsweise auf eine zweite Geschwindigkeit zu verringern, falls der analoge Sensor (4) erfasst, dass der Füllstand (L) über dem Füllstandssollwert (L_{SP}) liegt.

6. Rotationspresse (1) nach einem der vorstehenden Ansprüche, wobei der analoge Sensor (4) einen kontinuierlichen Füllstandserfassungsbereich (D) zwischen einer definierten oberen Füllstandsgrenze (L_{UP}), die über dem Füllstandssollwert (L_{SP}) liegt, und einer definierten unteren Füllstandsgrenze (L_{LOW}) aufweist, die unter dem Füllstandssollwert (L_{SP}) liegt, wobei die Steuereinheit vorzugsweise konfiguriert ist, um Zwischenfüllstandsgrenzen (L_{I,UP}, L_{I,LOW}) einzustellen, die zwischen dem Füllstandssollwert (L_{SP}) und der oberen und/oder unteren Füllstandsgrenze (L_{UP}, L_{LOW}) liegen, wobei die Steuereinheit (5) unabhängig von einer Geschwindigkeit des Presssystems (3) konfiguriert ist, um die Zuführgeschwindigkeit zu erhöhen, vorzugsweise auf eine dritte Geschwindigkeit, die höher als die erste Geschwindigkeit ist, falls der analoge Sensor (4) erfasst, dass der Füllstand (L) verringert ist, vorzugsweise unter die untere Füllstandsgrenze (L_{LOW}) fällt oder darunter liegt, und um die Zuführgeschwindigkeit zu verringern, vorzugsweise auf eine vierte Geschwindigkeit, die niedriger als die zweite Geschwindigkeit ist, falls der analoge Sensor (4) erfasst, dass der Füllstand (L) erhöht ist, vorzugsweise über die obere Füllstandsgrenze (L_{UP}) steigt oder darüber liegt.

7. Rotationspresse (1) nach Anspruch 6, wobei sich der Erfassungsbereich (D) über eine Erfassungslänge erstreckt, die sich zwischen dem Zuführer (20) und dem Presssystem (3) zwischen 20 mm und 100 mm, vorzugsweise zwischen 25 mm und 40 mm, mehr bevorzugt von etwa 35 mm, erstreckt.

8. Rotationspresse (1) nach einem der vorstehenden Ansprüche, wobei der analoge Sensor (4) derart konfiguriert ist, dass der Füllstandssollwert (L_{SP}) relativ zu dem Zuführrohr (21) bewegt werden kann, um den Füllstandssollwert (L_{SP}) zu erhöhen oder zu verringern, wobei die Bewegung durch den analogen Sensor (4) bereitgestellt wird, relativ zu dem Zuführrohr (21) bewegbar zu sein und/oder die Steuereinheit (5) konfiguriert ist, um einen Erfassungsstand des analogen Sensors für den Füllstandssollwert (L_{SP}) zu ändern, vorzugsweise innerhalb oder in Bezug auf den Erfassungsbereich (D) des analogen Sensors (4).

9. Rotationspresse (1) nach einem der vorstehenden Ansprüche, wobei das Zuführrohr (21) eine Zuführlänge (FL) aufweist, die sich zwischen dem Zuführer (20) und dem Presssystem (3) zwischen 50 mm und 4.000 mm, vorzugsweise zwischen 100 mm und 2.ooo mm, vorzugsweise zwischen 200 mm und 1.500 mm, mehr bevorzugt zwischen 500 mm und 1.000 mm und am meisten bevorzugt von 700 mm, erstreckt.

10. Rotationspresse (1) nach einem der vorstehenden Ansprüche, wobei die Matrizenhohlräume (31) um die Rotationsachse (R) herum angeordnet und vorzugsweise gleichmäßig verteilt sind, und/oder
wobei die Matrizenhohlräume (31) einen polygonalen Querschnitt, wenn in einer Pressrichtung (P) der Stempel (32), z. B. rechteckig oder quadratisch betrachtet, zum Pressen eines Bouillon-Würfels aufweist.

11. Rotationspresse (1) nach einem der vorstehenden Ansprüche, wobei das Zuführsystem (2) ferner umfasst:
• einen Trichter (22) zum Kippen von Presslebensmittelmaterial (M) an den Zuführer (20) und
• ein Sieb (23), das zwischen dem Zuführer (20) und dem Zuführrohr (21) bereitgestellt ist, um das gelieferte Presslebensmittelmaterial (M) zu sieben; wobei das Sieb (23) vorzugsweise beweglich oder fixiert ist und
• einen Presszuführer (25), wie ein Zuführschuh, der vorzugsweise einen Zuführpropeller aufweist, zum Verteilen des Presslebensmittelmaterials (M), das durch das Zuführrohr (21) an die Matrizenhohlräume (31) bereitgestellt ist, der zwischen dem Zuführrohr (21) und den Matrizenhohlräumen (31) der Rotationsmatrizenplatte (30) bereitgestellt ist, um ein definiertes Zuführen zu den Matrizenhohlräumen (31) zu ermöglichen, die das Zuführrohr (21) bei der Rotationsbewegung der Matrizenhohlräume (31) der Rotationsmatrizenplatte (30) in Bezug auf das Zuführsystem (2) passieren und
wobei der Zuführer (20) einen Schraub- oder Vibrationszuführer umfasst, und/oder einen Elektromotor (24), um den Zuführer (20) mit einer definierten Zuführgeschwindigkeit anzureiben, die durch die Steuereinheit (5) gesteuert wird und
wobei das Presssystem (3) ferner umfasst:
• eine Pressstation (33) zum Aufbringen einer Presskraft (S) auf die Stempel (32) und
• eine Tablettenentladungseinheit (34) zum Entladen der komprimierten Lebensmitteltablette (T), vorzugsweise eines Bouillon-Würfels oder einer Bouillon-Tablette.

12. Verfahren zum Pressen einer Lebensmitteltablette (T), wie einem Bouillon-Würfel, durch die Komprimierung eines Presslebensmittelmaterials (M), wie eines Lebensmittelpulvers, mit einer Rotationspresse (1), das Verfahren umfassend die Schritte:
a) kontinuierliches Liefern des Presslebensmittelmaterials (M) durch einen Zuführer (20) zu einem Zuführrohr (21) eines Zuführsystems (2) der Rotationspresse (1), wobei ein Füllstand (L) des Presslebensmittelmaterials (M) in dem Zuführrohr (21) durch einen analogen Sensor (4) erfasst wird,
b) aufeinanderfolgendes Aufnehmen einer Menge des Presslebensmittelmaterials (M), das durch das Zuführrohr (21) in einer Vielzahl von Matrizenhohlräumen (31) einer Rotationsmatrizenplatte (30) eines Presssystems (3) bereitgestellt wird, bei einer Rotationsbewegung der Rotationsmatrizenplatte (30), die um eine Rotationsachse (R) herum in Bezug auf das Zuführsystem (2) antreibbar ist, und
c) Herstellen von Lebensmitteltabletten (T) innerhalb der Matrizenhohlräume (31) mittels Stempel (32) bei der Rotationsbewegung der Rotationsmatrizenplatte (30),
wobei bei einer kontinuierlichen Lieferung des Presslebensmittelmaterials (M) an das Zuführrohr (21) eine Zuführgeschwindigkeit des Zuführers (20) basierend auf dem erfassten Füllstand (L) gesteuert wird, um den Füllstand (L) an einem definierten Füllstandssollwert (L_{SP}) zu halten;
**dadurch gekennzeichnet, dass**
der analoge Sensor ein LED-Infrarotsensor ist und wobei der analoge Sensor (4) aus einem Sender und einem Empfänger besteht, die auf gegenüberliegenden Seiten des Zuführrohrs (21) auf derselben Ebene bereitgestellt sind.

13. Verfahren nach Anspruch 12, ferner umfassend die Schritte:
Konstanthalten der Zuführgeschwindigkeit vorzugsweise bei einer definierten Sollwertgeschwindigkeit unabhängig von einer Geschwindigkeit des Presssystems (3), falls der analoge Sensor (4) erfasst, dass der Füllstand (L) dem Füllstandssollwert (L_{SP}) entspricht.

14. Verfahren nach Anspruch 12 oder 13, ferner umfassend die Schritte:
Erhöhen der Zuführgeschwindigkeit vorzugsweise auf eine erste Geschwindigkeit unabhängig von einer Geschwindigkeit des Presssystems (3), falls der analoge Sensor (4) erfasst, dass der Füllstand (L) unter dem Füllstandssollwert (L_{SP}) liegt und
Verringern der Zuführgeschwindigkeit vorzugsweise auf eine zweite Geschwindigkeit unabhängig von einer Geschwindigkeit des Presssystems (3), falls der analoge Sensor (4) erfasst, dass der Füllstand (L) über dem Füllstandssollwert (L_{SP}) liegt.

15. Verfahren nach einem der Ansprüche 12 bis 14, wobei der analoge Sensor (4) einen kontinuierlichen Füllstandserfassungsbereich (D) zwischen einer definierten oberen Füllstandsgrenze (L_{UP}) über dem Füllstandssollwert (L_{SP}) liegt und eine definierte untere Füllstandsgrenze(L_{LOW}) unter dem Füllstandssollwert (L_{SP}) liegt, das Verfahren ferner umfassend die Schritte:
Erhöhen der Zuführgeschwindigkeit vorzugsweise auf eine dritte Geschwindigkeit, die höher als die erste Geschwindigkeit ist, unabhängig von einer Geschwindigkeit des Presssystems (3), falls der analoge Sensor (4) erfasst, dass der Füllstand (L) verringert ist, vorzugsweise unter die untere Füllstandsgrenze (L_{LOW}) fällt oder darunter liegt, und
Verringern der Zuführgeschwindigkeit vorzugsweise auf eine vierte Geschwindigkeit, die niedriger als die zweite Geschwindigkeit ist, unabhängig von einer Geschwindigkeit des Presssystems (3), falls der analoge Sensor (4) erfasst, dass der Füllstand (L) erhöht ist, vorzugsweise über die obere Füllstandsgrenze (L_{UP}) steigt oder darüber liegt.

## Revendications

1. Presse rotative (1) destiné à comprimer un matériau alimentaire de pressage (M), comme de la poudre alimentaire, en des comprimés alimentaires (T), comprenant :
• un système d'alimentation (2) comprenant un dispositif d'alimentation (20) pour alimenter en continu le matériau alimentaire de pressage (M) et un tuyau d'alimentation (21) pour fournir le matériau alimentaire de pressage (M) reçu à partir du dispositif d'alimentation (20),
• un système de presse (3) comprenant un plateau de matrice rotatif (30) pouvant être entraîné autour d'un axe de rotation (R) et comprenant une pluralité de cavités de matrice (31) pour recevoir successivement une quantité de matière alimentaire de pressage (M) fournie par le tuyau d'alimentation (21) et pour produire des comprimés alimentaires (T) à l'intérieur des cavités de matrice (31) au moyen de poinçons (32) lors d'un déplacement en rotation des cavités de matrice (31) du plateau de matrice rotatif (30) par rapport au système d'alimentation (2),
• un capteur analogique (4) pour détecter un niveau de remplissage (L) du matériau alimentaire de pressage (M) dans le tuyau d'alimentation (21), et
• une unité de commande (5) configurée pour commander une vitesse d'alimentation du dispositif d'alimentation (20) pour alimenter en continu le matériau alimentaire de pressage (M) en fonction du niveau de remplissage (L) détecté pour maintenir le niveau de remplissage (L) au niveau d'un point de consigne de niveau de remplissage défini (L_{SP}) ;
**caractérisée en ce que**
le capteur analogique est un capteur infrarouge à DEL, et le capteur analogique (4) étant constitué d'un émetteur et d'un récepteur, prévus sur les côtés opposés du tuyau d'alimentation (21) au même niveau.

2. Presse rotative (1) selon la revendication 1, dans laquelle l'unité de commande (5) est en outre configurée pour commander la vitesse d'alimentation indépendamment de la vitesse du système de presse (3).

3. Presse rotative (1) selon l'une quelconque des revendications précédentes, comprenant en outre une unité de commande de presse (50) configurée pour commander la vitesse du système de presse (3) indépendamment de la vitesse d'alimentation et du niveau de remplissage (L) détecté, dans laquelle l'unité de commande (5) comprend l'unité de commande de presse (50).

4. Presse rotative (1) selon l'une quelconque des revendications précédentes, dans laquelle l'unité de commande (5) est configurée, indépendamment d'une vitesse du système de presse (3), pour maintenir constante la vitesse d'alimentation de préférence à une vitesse de point de consigne définie, si le capteur analogique (4) détecte le niveau de remplissage (L) comme correspondant au point de consigne de niveau de remplissage (L_{SP}).

5. Presse rotative (1) selon l'une quelconque des revendications précédentes, dans laquelle l'unité de commande (5) est configurée, indépendamment d'une vitesse du système de presse (3), pour augmenter la vitesse d'alimentation de préférence à une première vitesse, si le capteur analogique (4) détecte le niveau de remplissage (L) comme étant au-dessous du point de consigne de niveau de remplissage (L_{SP}), et pour diminuer la vitesse d'alimentation de préférence à une deuxième vitesse, si le capteur analogique (4) détecte le niveau de remplissage (L) comme étant au-dessus du point de consigne de niveau de remplissage (L_{SP}).

6. Presse rotative (1) selon l'une quelconque des revendications précédentes, dans laquelle le capteur analogique (4) a une plage de détection (D) du niveau de remplissage continu entre une limite supérieure de niveau de remplissage (L_{UP}) définie au-dessus du point de consigne de niveau de remplissage (L_{SP}) et une limite inférieure de niveau de remplissage (L_{LOW}) définie au-dessous du point de consigne de niveau de remplissage (L_{SP}), l'unité de commande étant de préférence configurée pour établir des limites intermédiaires de niveau de remplissage (L_{I,UP}, L_{I,LOW}) entre le point de consigne de niveau de remplissage (L_{SP}) et la limite supérieure et/ou inférieure de niveau de remplissage (L_{UP}, L_{LOW}), l'unité de commande (5) étant configurée, indépendamment d'une vitesse du système de presse (3), pour augmenter la vitesse d'alimentation, de préférence à une troisième vitesse supérieure à la première vitesse, si le capteur analogique (4) détecte le niveau de remplissage (L) comme diminuant, de préférence comme baissant ou étant au-dessous de la limite inférieure de niveau de remplissage (L_{LOW}), et pour diminuer la vitesse d'alimentation, de préférence à une quatrième vitesse inférieure à la deuxième vitesse, si le capteur analogique (4) détecte le niveau de remplissage (L) comme augmentant, de préférence comme dépassant ou étant au-dessus de la limite supérieure de niveau de remplissage (L_{UP}).

7. Presse rotative (1) selon la revendication 6, dans laquelle la plage de détection (D) s'étend sur une longueur de détection s'étendant entre le dispositif d'alimentation (20) et le système de presse (3) comprise entre 20 mm et 100 mm, de préférence entre 25 mm et 40 mm, plus préférablement d'environ 35 mm.

8. Presse rotative (1) selon l'une quelconque des revendications précédentes, dans laquelle le capteur analogique (4) est configuré de telle sorte que le point de consigne de niveau de remplissage (L_{SP}) peut être déplacé par rapport au tuyau d'alimentation (21) pour augmenter ou diminuer le point de consigne de niveau de remplissage (L_{SP}), ledit déplacement étant fourni par le capteur analogique (4) étant déplaçable par rapport au tuyau d'alimentation (21) et/ou l'unité de commande (5) étant configurée pour changer un niveau de détection du capteur analogique pour le point de consigne de niveau de remplissage (L_{SP}), de préférence à l'intérieur de ou par rapport à la plage de détection (D) du capteur analogique (4).

9. Presse rotative (1) selon l'une quelconque des revendications précédentes, dans laquelle le tuyau d'alimentation (21) a une longueur d'alimentation (FL) s'étendant entre le dispositif d'alimentation (20) et le système de presse (3) comprise entre 50 mm et 4000 mm, de préférence entre 100 mm et 2000 mm, de préférence entre 200 mm et 1500 mm, plus préférablement entre 500 mm et 1000 mm, et le plus préférablement de 700 mm.

10. Presse rotative (1) selon l'une quelconque des revendications précédentes, dans laquelle les cavités de matrice (31) sont agencées et de préférence uniformément réparties autour de l'axe de rotation (R), et/ou
dans laquelle les cavités de matrice (31) ont une section transversale polygonale lorsqu'elle est observée dans une direction de pressage (P) des poinçons (32), p. ex. rectangulaire ou carrée, pour presser un cube de bouillon.

11. Presse rotative (1) selon l'une quelconque des revendications précédentes, dans laquelle le système d'alimentation (2) comprend en outre :
• une trémie (22) pour le basculement du matériau alimentaire de pressage (M) sur le dispositif d'alimentation (20), et
• un tamis (23) étant prévu entre le dispositif d'alimentation (20) et le tuyau d'alimentation (21) pour tamiser le matériau alimentaire de pressage (M) alimenté, le tamis (23) étant de préférence déplaçable ou fixé, et
• un dispositif d'alimentation de presse (25), comme un sabot d'alimentation ayant de préférence une hélice d'alimentation, pour distribuer le matériau alimentaire de pressage (M) fourni par le tuyau d'alimentation (21) aux cavités de matrice (31), étant prévu entre le tuyau d'alimentation (21) et les cavités de matrice (31) du plateau de matrice rotatif (30) pour permettre une alimentation définie des cavités de matrice (31) passant dans le tuyau d'alimentation (21) lors du déplacement en rotation des cavités de matrice (31) du plateau de matrice rotatif (30) par rapport au système d'alimentation (2), et
dans laquelle le dispositif d'alimentation (20) comprend un dispositif d'alimentation à vis ou à vibrations, et/ou un moteur électrique (24) pour faire fonctionner le dispositif d'alimentation (20) à une vitesse d'alimentation définie commandée par l'unité de commande (5), et
dans laquelle le système de presse (3) comprend en outre :
• un poste de pressage (33) pour appliquer une force de pressage (S) sur les poinçons (32), et
• une unité de décharge de comprimé (34) pour décharger le comprimé alimentaire (T) comprimé, de préférence un cube de bouillon ou un comprimé de bouillon.

12. Procédé pour presser un comprimé alimentaire (T), comme un cube de bouillon, par compression d'un matériau alimentaire de pressage (M), comme une poudre alimentaire, avec une presse rotative (1), le procédé comprenant les étapes consistant à :
a) alimenter en continu le matériau alimentaire de pressage (M) par un dispositif d'alimentation (20) à un tuyau d'alimentation (21) d'un système d'alimentation (2) de la presse rotative (1), un niveau de remplissage (L) du matériau alimentaire de pressage (M) dans le tuyau d'alimentation (21) étant détecté par un capteur analogique (4),
b) recevoir successivement une quantité de matériau alimentaire de pressage (M) fournie par le tuyau d'alimentation (21) dans une pluralité de cavités de matrice (31) d'un plateau de matrice rotatif (30) d'un système de presse (3) lors d'un déplacement en rotation du plateau de matrice rotatif (30) pouvant être entraîné autour d'un axe de rotation (R) par rapport au système d'alimentation (2), et
c) produire des comprimés alimentaires (T) à l'intérieur des cavités de matrice (31) au moyen de poinçons (32) lors du déplacement en rotation du plateau de matrice rotatif (30),
dans laquelle, lors de l'alimentation continue du matériau alimentaire de pressage (M) au tuyau d'alimentation (21), la vitesse d'alimentation du dispositif d'alimentation (20) est commandée en fonction du niveau de remplissage (L) détecté pour maintenir le niveau de remplissage (L) au niveau d'un point de consigne de niveau de remplissage (L_{SP}) défini ;
**caractérisée en ce que**
le capteur analogique est un capteur infrarouge à DEL, et le capteur analogique (4) étant constitué d'un émetteur et d'un récepteur, prévus sur les côtés opposés du tuyau d'alimentation (21) au même niveau.

13. Procédé selon la revendication 12, comprenant en outre l'étape consistant à :
maintenir constante la vitesse d'alimentation de préférence à une vitesse de point de consigne définie, indépendamment d'une vitesse du système de presse (3), si le capteur analogique (4) détecte le niveau de remplissage (L) comme correspondant au point de consigne de niveau de remplissage (L_{SP}).

14. Procédé selon la revendication 12 ou 13, comprenant en outre les étapes consistant à :
augmenter la vitesse d'alimentation de préférence à une première vitesse, indépendamment d'une vitesse du système de presse (3), si le capteur analogique (4) détecte le niveau de remplissage (L) comme étant au-dessous du point de consigne de niveau de remplissage (L_{SP}), et
diminuer la vitesse d'alimentation de préférence à une deuxième vitesse, indépendamment d'une vitesse du système de presse (3), si le capteur analogique (4) détecte le niveau de remplissage (L) comme étant au-dessus du point de consigne de niveau de remplissage (L_{SP}).

15. Procédé selon l'une quelconque des revendications 12 à 14, dans lequel le capteur analogique (4) a une plage de détection (D) du niveau de remplissage continu entre une limite supérieure de niveau de remplissage (L_{UP}) définie au-dessus du point de consigne de niveau de remplissage(L_{SP}) et une limite inférieure de niveau de remplissage (L_{LOW}) définie au-dessous du point de consigne de niveau de remplissage (L_{SP}), le procédé comprenant en outre les étapes consistant à : augmenter la vitesse d'alimentation de préférence à une troisième vitesse supérieure à la première vitesse, indépendamment d'une vitesse du système de presse (3), si le capteur analogique (4) détecte le niveau de remplissage (L) comme diminuant, de préférence comme baissant ou étant au-dessous de la limite inférieure de niveau de remplissage (L_{LOW}), et diminuer la vitesse d'alimentation de préférence à une quatrième vitesse inférieure à la deuxième vitesse, indépendamment d'une vitesse du système de presse (3), si le capteur analogique (4) détecte le niveau de remplissage (L) comme augmentant, de préférence comme dépassant ou étant au-dessus de la limite supérieure de niveau de remplissage (L_{UP}).
